# EUROPEAN PATENT SPECIFICATION

(11) **EP 2 600 474 B1**
(45) Date of publication and mention of the grant of the patent: **14.10.2015**
(21) Application number: 11191385.1
(22) Date of filing: 30.11.2011
(51) Int. Cl.: H02G 1/12, B26B 27/00

(54) **Cutting apparatus to cut a coating of a grooved tight buffered fiber**
Schneidevorrichtung zum Schneiden einer Beschichtung einer fest gepufferten gerillten Faser
Appareil de découpe pour découper un revêtement d'une fibre rainurée étroitement tamponnée

(43) Date of publication of application: 05.06.2013
(73) Proprietor: CCS Technology, Inc., Wilmington, DE 19803 (US)
(72) Inventor: Stöcklein, Waldemar, 96450 Coburg (DE)
(74) Representative: Epping - Hermann - Fischer

(56) References cited:
- DE-U1- 8 802 499
- FR-A- 1 261 360
- GB-A- 555 009
- GB-A- 559 634
- US-A- 2 761 211
- US-A- 5 050 302

## Description

### Technical Field

The technology of the disclosure relates to a cutting apparatus to cut a coating of a grooved tight buffered fiber to expose an optical fiber of the tight buffered fiber. The disclosure further relates to a method to cut a coating of a grooved tight buffered fiber to expose the optical fiber of the tight buffered fiber.

### Background

Tight buffered fibers are commonly used in different cable designs. This kind of a cable is often preferred, because of its better mechanical protection and its better manageability which is primarily caused by the increased diameter of the up-coated fibers of for example up to 900 µm. A tight buffered fiber may comprise an optical fiber with a typical outside diameter of 250 µm. The optical fiber includes a fiber core and a cladding surrounded by a primary coating. The optical fiber is protected by a secondary coating surrounding the optical fiber, so that the tight buffered fiber may have an outside diameter of up to about 900 µm. The secondary coating may comprise a thermoplastic material, such as PVC (Polyvinylchloride), PA (Polyamide) or highly filled PE (Polyethylene) based compounds, for example FRNC (flame-retardant non-corrosive) compounds.

When tight buffered fibers are deployed, the tight buffered fibers need to be either terminated with fiber optic connectors or spliced to other optical fibers. In both applications the secondary coating has to be removed from the tight buffered fiber on a certain length. Different applications lead to different requirements with respect to the total length of the outer coating to be removed. For terminating a tight buffered fiber with a connector only a piece of approximately 30 mm has to be removed. However, when an optical fiber of a tight buffered fiber has to be spliced to another optical fiber, very often the removal of the secondary coating with a length of up to 150 cm is required.

Because of the strong adhesion of the secondary coating of the tight buffered fiber, the stripability gets more difficult the longer the required strip length is. Unfortunately, the adhesion has to maintain a certain level because otherwise the secondary coating will shrink during temperature-cycling and, because of buckling, will lead to a remarkable attenuation increase.

In DE 88 02 499 U1 a tool for cutting a jacket of an electrical cable is shown. The cutting tool comprises a supporting device having a plurality of tubes for inserting cables of different diameters. When a cable is inserted in one of the tubes the cutting device may be pressed against the jacket of the cable through an opening in the tube. The depth by which the cutting device penetrates may be set by an adjusting means. The preamble of claim 1 is based on this document.

US 5,050,302 is directed to a slitting tool comprising a central passage to insert an optical fiber. The tool comprises blade slots including blade holders with blades to cut a buffer tube of the optical cable. In order to cut the buffer tube of the cable, the cable is inserted in the central passage and the blade holders are depressed in the blade slots, whereby cuts are made in the buffer tube.

There is an impetus to provide a cutting apparatus to cut a coating of a grooved tight buffered fiber along a short section of the tight buffered fiber which enables to easily removed the coating along a longer section of the tight buffered fiber simply by hands. Furthermore, a method to cut a coating of a grooved tight buffered fiber along a short section of the cable will be specified which enables to prepare the cable such that the coating along a longer section of the cable can easily peeled off by hands.

### Summary

The invention is defined in claim 1, which protects a cutting apparatus to cut a coating of a grooved tight buffered cable having a longitudinal axis. The cutting apparatus comprises a body comprising a hole to insert the tight buffered fiber, a cutting device to cut the coating of the tight buffered fiber and an opening extending from an outer surface of the body to the hole. In the condition, when the cable is inserted in the hole, the cutting apparatus is configured to be disposed around the tight buffered fiber in a first state and a second state. The cutting apparatus is configured so that, in the first state of the cutting apparatus, the cutting apparatus is disposed rotatably around a longitudinal axis of the cable. The cutting apparatus is further configured so that, in the second state of the cutting apparatus, the rotational movement of the cutting apparatus around the longitudinal axis of cable is blocked and the cutting apparatus is disposed around the cable movably in a direction parallel to the longitudinal axis of the cable. The cutting device is configured to slide over a surface of the cable in the first state of the cutting apparatus and to engage into a groove of the cable in the second state of the cutting apparatus. The cutting device is configured to cut the coating of the cable in the second state of the cutting apparatus by moving the cutting apparatus to cut the coating in the direction parallel to the longitudinal axis of the cable.

The cutting device is disposed in the opening, and comprises a blade, and is arranged in the opening movably between a first position in which the blade is disposed outside the hole and a second position in which the blade penetrates into the hole. The cutting device comprises a plunger coupled to the blade, wherein the plunger projects out of the opening. The cutting device is configured to be moved from the first position to the second position by pressing the plunger into the opening. The opening comprises a first section and a second section being in contact with each other, the first section having a narrower diameter than the second section. The blade is guided within the first section of the opening and the plunger is guided within the second section of the opening, when the cutting device is moved from the first position to the second position.

The second section of the opening comprises a first end coupled to the surface of the body and a second end coupled to first section of the opening. The second end of the second section is formed as an arrestor which limits the intrusion of the blade into the hole, when moving the cutting device from the first position to the second position such that, when the tight buffered fiber is inserted in the hole, the blade of the cutting apparatus cuts a coating of the tight buffered fiber in a radial direction of the tight buffered fiber, when the plunger hits the arrestor.

Embodiments disclosed in the detailed description include a cutting apparatus to cut a coating of a grooved tight buffered fiber and methods to cut a coating of a grooved tight buffered fiber.

An embodiment of a method to cut a coating of a grooved tight buffered fiber comprises the providing of the cutting apparatus. The tight buffered fiber is inserted into the hole. The cutting apparatus is turned around the longitudinal axis of the grooved tight buffered fiber until the cutting device engages into a groove of the tight buffered fiber. The cutting device is pressed through the opening into the groove of the cable and thereby the coating of the cable is cut in a radial direction of the cable. The cutting apparatus is moved in the longitudinal direction of the cable and the coating is cut along the longitudinal direction of the cable.

A further embodiment of a method to cut a coating of a grooved tight buffered fiber comprises a step of providing the cutting apparatus. The tight buffered fiber is inserted into the hole. The cutting apparatus is turned around the longitudinal axis of the cable, wherein during the turning movement, the sensing device slides along the surface of the tight buffered fiber until the sensing device snaps into the groove of the tight buffered fiber. The cutting device is pressed through the opening into the groove of the tight buffered fiber and thereby the coating of the tight buffered fiber is cut in a radial direction of the cable. The cutting apparatus is moved in the longitudinal direction of the tight buffered fiber and the coating of the tight buffered fiber is cut along the longitudinal direction of the tight buffered fiber.

It is to be understood that both the foregoing general description and the following detailed description present embodiments of the cutting apparatus to cut a coating of a grooved tight buffered fiber and the method to cut a coating of a grooved tight buffered fiber, and are intended to provide an overview or framework for understanding the nature and character of the cutting apparatus and method for cutting the coating of the grooved tight buffered fiber as it is claimed. The accompanying drawings are included to provide a further understanding of the cutting apparatus and the method for cutting the coating of a grooved tight buffered fiber, and are incorporated into and constitute a part of this specification. The drawings illustrate various embodiments of the cutting apparatus and the method for cutting the coating of the grooved tight buffered fiber, and together with the description serve to explain the principals and operation of the cutting apparatus and the method.

### Brief Description of the Drawings

- Figure 1: shows an embodiment of a tight buffered fiber;
- Figure 2: shows an embodiment of a grooved tight buffered fiber;
- Figure 3: shows an embodiment of a cutting apparatus to cut a coating of a grooved tight buffered fiber;
- Figure 4A: shows a cross-section of an embodiment of a cutting apparatus to cut a coating of a grooved tight buffered fiber in a first state;
- Figure 4B: shows an embodiment of a cutting apparatus to cut a coating of a grooved tight buffered fiber in a second state;
- Figure 5: shows another embodiment of a cutting apparatus to cut a coating of a grooved tight buffered fiber;
- Figure 6: shows a cross-section of an embodiment of a cutting apparatus to cut a coating of a grooved tight buffered fiber.

### Detailed Description

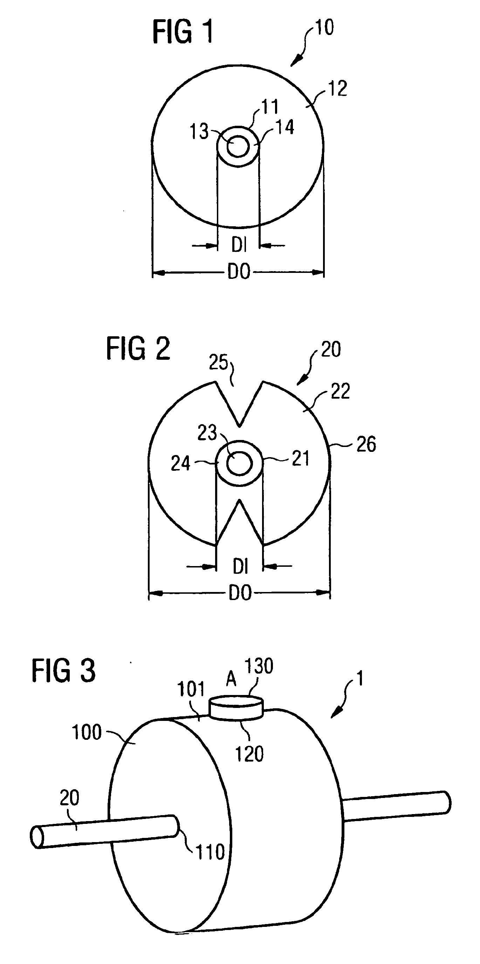

Figure 1 shows an embodiment of a tight buffered optical fiber 10 comprising an optical fiber 11 and an outer, secondary coating 12 surrounding the optical fiber. The optical fiber may comprise a fiber core and cladding 13 surrounded by a primary coating 14. The optical fiber is protected by the secondary coating 12. The core section 11 may have a diameter DI of 250 µm and the total tight buffered fiber including the outer coating 12 may have an outer diameter DO of about 900 µm.

If the tight buffered fiber is terminated by a connector or connected to another optical fiber, the outer coating 12 has to be removed from the optical fiber 11. Due to the high adhesion and the small dimensions of the tight buffered fiber, cutting the coating 12 often turns out to be difficult to handle.

Figure 2 shows an embodiment of a grooved tight buffered fiber 20 comprising an optical fiber 21 which is similarly formed as the optical fiber 11 of the standard tight buffered fiber 10 illustrated in Figure 1. The core section 21 comprises a fiber core 23 including a cladding which is surrounded by a primary coating 24. The optical fiber 21 is surrounded and protected by a secondary outer coating 22.

In order to weaken the outer coating 22, the coating 22 comprises grooves 25 in the coating 22. The tight buffered fiber may comprise two grooves in the secondary coating 22 which are arranged opposite to each other. Each groove may extend from a surface 26 of the secondary coating in the interior of the coating 22 of the cable to an extent more than half of the diameter of the secondary coating 22.

The grooves may facilitate stripping-off the outer coating 22 from the optical fiber 21. However, due to the small dimensions of the cable which may typically have a diameter DI of the optical fiber 21 of about 250 µm and an outer diameter DO of about 900 µm, it is nevertheless difficult to manually strip-off the coating 22 from the core section 21. The coating may peeled off easily not before the two halves of the secondary coating are separated from each other

Figure 3 shows an embodiment of a cutting apparatus 1 to cut a coating 22 of a grooved tight buffered cable 20 in an easy and reliable way. The cutting apparatus 1 comprises a body 100 comprising a hole 110 to insert an optical transmission element, such as a grooved tight buffered fiber 20. The hole 110 may be formed as bore which extends through the center of the body 100. The body 100 comprises an opening 120 placed at a location "A" of the body 100. The opening 120 extends from the outer surface 101 of the body radially into the interior of the body. A cutting device 130 which is configured to cut the secondary coating 22 of the optical cable 20 is provided within the opening 120.

The body 100 of the access tool 1 to expose the optical fiber 21 of the tight buffered fiber may be formed of a rigid material and may comprise a metal or a suitable plastic, for example PBT (Polybutylenetherephthalate), PS (Polystyrole) or PPA (Polyphthalamide). The body may have a diameter between 15 mm and 20 mm and a length between 15 mm and 20 mm. The hole 110 may be formed as a bore hole being drilled along a center axis of the body 100 in the material of the body with a diameter between 0.90 mm to 1.0 mm. Other diameters of the hole 110, for example approximately 0.5 mm to 0.7 mm, are also feasible and should be used depending on the nominal diameter of the tight buffered fiber which is intended to be inserted in the bore 110.

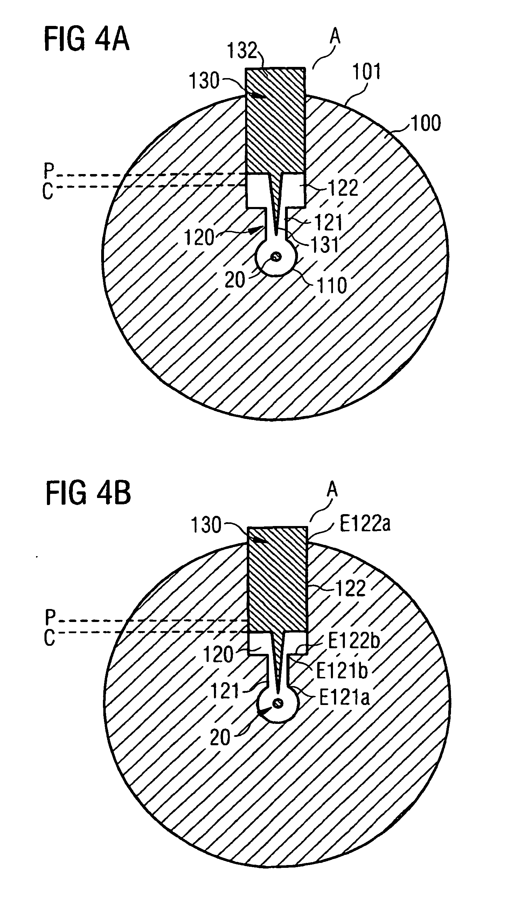

Figures 4A and 4B show cross sections of an embodiment of the cutting apparatus 1 to cut the secondary coating of a grooved tight buffered fiber 20 at the position "A". The body 100 of the access tool 1 may be cylindrically shaped and includes the hole 110. The hole 110 may be located in the center of the tool extending through the whole body 100. The hole 110 is formed so that the grooved tight buffered fiber may be inserted into the hole. The body 100 further comprises the opening 120 extending from the outer surface 101 of the body to the hole 110. The cutting device 130 to cut the outer coating 22 of the grooved tight buffered fiber 20 is disposed within the opening 120.

The cutting device 130 may be formed as a stylus comprising a blade 131 and a plunger 132. The plunger 132 is coupled to the blade 131 and projects out of the opening 120. The cutting device is arranged inside the opening 120 movably between a first position, in which the blade 131 is disposed outside the hole 110, and a second position, in which the blade 131 penetrates the hole 110. Figure 4A shows the first state of the cutting device in which the blade 131 is disposed at a "park" position outside the hole 110. Figure 4B shows a cross-section of the cutting apparatus 1 at the position "A" with the cutting device 130 being moved to the second position in which the blade 131 extends into the hole 110.

The opening 120 comprises a section 121 and a section 122 being in contact with each other. The section 121 has a narrower diameter than the section 122. The section 121 of the opening 120 has an end E121a coupled to the hole 110 and an end E121b coupled to the section 122 of the opening 120. The section 122 of the opening 120 comprises an end E122a coupled to the surface 101 of the body and an end E122b coupled to the section 121 of the opening 120.

When the tight buffered fiber is inserted in the hole 110, the cutting apparatus 1 may be disposed around the tight buffered fiber in a first state and a second state. In the first state of the cutting apparatus 1, the apparatus 1 is disposed rotatably around a longitudinal axis of the fiber 20, and the blade 131 of the cutting device touches the surface 26 of the grooved tight buffered cable 20. In the second state of the cutting apparatus 1, the cutting device 130 engages into one of the grooves 25 of the grooved tight buffered fiber so that a rotational movement of the cutting apparatus 1 around the longitudinal axis of the fiber 20 is blocked. In the second state of the cutting apparatus 1, the apparatus 1 can only be moved in a longitudinal direction of the cable wherein the blade 131 is guided within the groove 25 of the fiber.

In order to cut the coating 22 of the cable 20, the cable is inserted in the hole 110 up to a length on which the secondary coating 22 has to be removed by the access tool. When the cable 20 is inserted in the opening 110, the cutting device 130 is in a "park" position. In the "park" position the blade 131 is guided within the section 121 of the opening 120 and touches the surface 26 of the outer coating 22 of tight buffered fiber 20.

In order to find one of the grooves 25 for cutting the coating 22 along the groove, the cutting apparatus 1 is turned in the first state around the longitudinal axis of the tight buffered fiber. During the rotational movement of the cutting apparatus 1 the tip of the blade 131 slides over the surface 26 of the outer coating 22 until the blade snaps into one of the grooves 25 of the tight buffered fiber. When the blade 131 engages into the groove 25, the cutting apparatus 1 is in the second state in which a rotational movement of the cutting apparatus is blocked by the blade which is engaged into the groove 25.

Up to now, the cutting device 130 is still projecting out of the opening 120. In order to cut-through the secondary coating 22, the cutting device 130 still projecting out of the opening 120 can be pressed in the opening 120 such that the blade 131 cuts the coating 22 of cable 20 in a radial direction of the tight buffered fiber. The plunger 132 is pressed inside the opening 120 until the plunger hits the end E122b of section 122 of the opening 120. The end E122b is formed as an arrestor which limits the radial movement of the cutting device 130 in the opening 120. The section 122 has a depth in the body 100 such that the blade 131 intrudes into the hole 110 so that the secondary coating 22 is cut-trough, but the optical fiber 21 itself is not damaged by the sharp tip of the blade 131.

In order to slit the secondary coating 22 along the longitudinal direction of the tight buffered fiber, the cutting apparatus 1 is moved in the longitudinal direction of the cable 20 to the end of the cable when the cutting apparatus 1 is in the second state. The sharp tip of blade 131 cuts the coating 22 along the longitudinal direction of the cable 20 so that the secondary coating 22 is peeled-off along one of the grooves up to the end of the cable.

In order to also cut the coating 22 along the opposite groove of the tight buffered fiber 20, the process of inserting the end of the tight buffered fiber into the hole 110, the step of turning the cutting apparatus 1 until the cutting device snaps into the opposite groove, the step of pressing the cutting device 130 into the opening 110 to cut through the coating 22 of the tight buffered fiber in the radial direction, and the step of moving the cutting apparatus 1 in the longitudinal direction of the tight buffered fiber towards the end of the tight buffered fiber to slit the coating 22 at the opposite notch 25 of the tight buffered fiber has to be repeated.

When the secondary coating is cut by the access tool 1 along an end section of the cable, the two separated halves of the coating 22 can be peeled off any length needed by pulling apart the two halves of the coating 22 simply by hand.

Instead of using the same cutting apparatus 1 twice to peel off the coating 22 along the opposite grooves, a first and a second cutting apparatus may be put on the tight buffered fiber. The first cutting apparatus is then used to cut the coating 22 along the first groove and the second cutting apparatus may be used to cut the coating 22 along the opposite second groove.

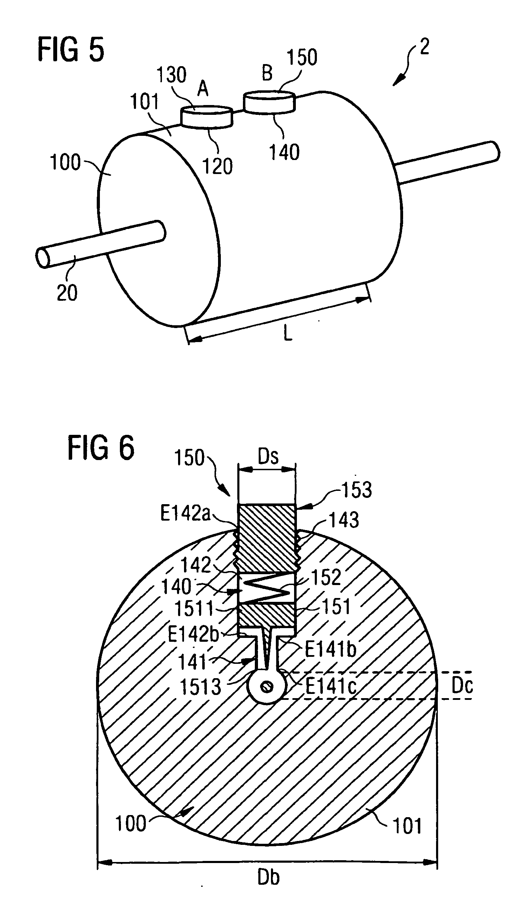

Figure 5 shows another embodiment of a cutting apparatus 2 to cut the coating 22 of a grooved tight buffered fiber 20. The cutting apparatus 2 comprises a body 100 which may be cylindrical-shaped. The body 100 comprises a hole 110 to insert the cable 20. At a location "A" the body further comprises the opening 120 with the cutting device 130 as explained with reference to Figures 4A and 4B. In addition, the body 100 of the access tool 2 is formed with an opening 140 placed at a location "B" of the body 100. The openings 120 and 140 are positioned on a virtual line of the surface 101, the virtual line being parallel to the center axis of the hole 110. The opening 140 extends from the surface 101 of the body 100 into the interior of the body and leads to the hole 110. The cutting apparatus 2 further comprises a sensing device 150 to sense the surface 26 of the cable 20 to find one of the grooves 25 of the cable 20. The sensing device 150 is disposed in the opening 140.

The body 100 of the access tool 2 to expose the optical fiber 21 of the cable may be formed of a rigid material, such as a metal or a suitable plastic, for example PBT (Polybutylenetherephthalate), PS (Polystyrole) or PPA (Polyphthalamide). The body may have a diameter Db between 15 mm and 20 mm and a length L between 15 mm and 20 mm. The hole 110 may be formed as a bore hole being drilled along a center axis of the body 100 in the material of the body with a diameter between 0.90 mm to 1.0 mm. Other diameters of the hole 110, for example approximately 0.5 mm to 0.7 mm, are also feasible and should be used depending on the nominal diameter of the tight buffered fiber which is intended to be inserted in the hole 110.

Figure 6 shows a cross-section of the body 100 at the position "B". The opening 140 is formed as a guiding hole for the sensing device 150. The opening 140 comprises a first section 141 and a second section 142 being in contact with each other. The section 141 extends to the hole 110 and the section 142 extends to the surface 101 of the body 100. The section 141 has a narrower diameter than the section 142. Section 142 may have a diameter Ds between 10 mm to 15 mm. The smaller section 141 may have a diameter between 2 mm to 5 mm. An end E141a of section 141 is coupled to the hole 110 and an end E141b of section 141 is coupled to the section 142 of opening 140. An end E142a of section 142 is coupled to the surface 101 of the body 100 and an end E142b is coupled to the section 141 of the opening 140.

The sensing device 150 comprises a stylus 151, a spring element 152 to exert a force on the stylus 151 and an adjusting element 153 to adjust the tension of the spring element. The stylus 150 may comprise a mechanical probe 1511 and a plunger 1512 which are coupled to each other. The mechanical probe 1511 is guided in section 141 of opening 140, and the plunger 1512 is guided in section 142 of opening 140. The mechanical probe 1511 may be formed with a tip 1513 adjusted to slide over the surface 26 of cable 20 and to snap into the groove 25 of the tight buffered fiber 20. The mechanical probe 1512 may be formed with a rounded tip or a ball-shaped head. The round or ball-shaped form of the head 1513 of the mechanical probe facilitates the sliding of the mechanical probe 1512 over the surface 101 of the cable 100 with a low resistance.

In order to adjust the tension of the spring element 152 which presses the stylus 151 towards the surface 26 of the cable 20, the section 142 is formed with a thread 143 extending from the surface 101 in the interior of the opening 140. The adjusting element 153 may be formed as a screw disposed in the thread 143. The tension of the spring element 152 is adjustable by setting the position of the screw 153 in the thread 143.

In order to strip-off the coating 22 of the grooved tight buffered fiber 20, the cable 20 is inserted in the hole 110 of body 100 of the access tool 2. The cutting apparatus 2 may adopt a first state and a second state when the cable 20 is inserted in the hole 110. In the first state of the cutting apparatus 2, the apparatus 2 is disposed rotatably around a longitudinal axis of the cable 20. In the second state of the cutting apparatus 2, the rotational movement of the cutting apparatus 2 around the longitudinal axis of the cable 20 is blocked and the cutting apparatus 2 may just be moved over the cable in a longitudinal direction of the tight buffered fiber.

After inserting the cable 20 into the hole 110, the cutting apparatus 2 to cut the coating 22 is initially in the first state in which the mechanical probe 1511 of the stylus 151 touches the surface 26 of cable 20 without being engaged into one of the grooves 25. The cutting device 130 is in the "park" position so that the blade 132 is disposed in section 121 of the opening 120 and does not extend into the hole 110. In order to find the position of one of the grooves 25, the cable 20 is fixed and the cutting apparatus 2 is turned around the longitudinal axis of the cable 20 so that the head 1513 of the mechanical probe 1511 slides over the surface 26 of cable 20. When one of the grooves 25 of the cable is reached the stylus 150 snaps in the groove. The mechanical probe 1511 engages into the groove 25 of the cable so that a further rotational movement of the cutting apparatus 2 around the longitudinal axis of the cable is blocked by the snapped-in stylus 151.

After having found one of the grooved sections 25 of the cable 20, the cutting device 130 is pressed into the opening 120. Since the openings 120 and 140 are arranged on a virtual line on the the surface 101 of the body being parallel in relation to the hole 110 or optical cable 20, the cutting device 130 penetrates into in the detected groove 25 of the cable to cut the coating 22 of the cable in a radial direction of the cable. The end E122b of the section 122 of the opening 120 is formed as an arrestor which limits the intrusion of the blade 131 into the bore 110 when the cutting device 120 is pressed inside the opening 120. The section 122 is formed with a depth inside the body 100 so that the blade 131 cuts the coating 22 but does not damage the optical fiber 21 of the cable 20.

In order to cut the secondary coating 22, the cutting apparatus 2 is moved in the longitudinal direction of the cable to cut the coating 22 along the longitudinal direction of the tight buffered fiber in one of the grooves 25.

In order to also cut the coating 22 along the opposite groove 25 of the tight buffered fiber, the end of the tight buffered fiber is again inserted into the hole 110 and the steps of turning the cutting apparatus 2 around the cable 20 until the stylus 150 snaps into the opposite groove 25, pressing the cutting device down into the opening 120 to cut the coating 22 in a radial direction, and moving the cutting apparatus 2 towards the end of the tight buffered fiber while pressing the cutting device 130 into the opening 120 to cut the coating 22 along the longitudinal direction of the cable is repeated.

According to another possibility to cut the secondary coating 22 of the grooved tight buffered fiber 20 along both of the grooves a first and a second one of the cutting apparatuses 2 to cut the coating of the tight buffered fiber are provided and are put behind each other on the grooved tight buffered fiber 20. The first cutting apparatus is used to cut the coating 22 along a first one of the grooves, and the second cutting apparatus is used to cut the coating 22 along the opposite second one of the grooves.

After having cut the coating 22 along both of the grooves at an end section of the tight buffered fiber, two halves of the peeled-off coating are accessible so that the two halves can easily further be peeled off manually by any length needed.

When turning the cutting apparatus 1, 2 to cut the coating of the tight buffered fiber to find one of the grooves, the tight buffered fiber has to be fixed in relation to the cutting apparatus 1, 2. A clamping device can be used to clamp the grooved tight buffered fiber when turning the body 100 of the cutting apparatus 1, 2 which facilitates the fixing of the tight buffered fiber. The clamping tool prevents the grooved tight buffered fiber from turning, when the access tool 1, 2 is rotated around the tight buffered fiber to find the position of the grooves.

Although the present cutting apparatus to cut a coating of a grooved tight buffered fiber and the method for cutting the coating of the grooved tight buffered fiber have been illustrated and described herein with reference to preferred embodiments and specific examples thereof, it will be readily apparent to those of ordinary skill in the art that other embodiments and examples can perform similar functions and/or achieve like results. All such equivalent embodiments and examples are within the scope of the present cutting apparatus and the method for cutting the coating of the tight buffered fiber if covered by the appended claims. It will also be apparent to those skilled in the art that various modifications and variations can be made to the present cutting apparatus to cut a coating of a grooved tight buffered fiber and the method for cutting a coating of a grooved tight buffered fiber without departing from the scope of the claims. Thus, it is intended that the present cutting apparatus and the method cover the modifications and variations of the cutting apparatus to cut the coating of the grooved tight buffered fibers and the method for cutting the coating provided they come within the scope of the appended claims.

## Claims

1. A cutting apparatus (1, 2) to cut a coating (22) of a grooved tight buffered fiber (20), the tight buffered fiber having a longitudinal axis, comprising:
- a body (100) comprising a hole (110) to insert the tight buffered fiber (20),
- a cutting device (130) to cut the coating (22) of the tight buffered fiber,
- an opening (120) extending from an outer surface (101) of the body (100) to the hole (110),
- wherein, when the tight buffered fiber (20) is inserted in the hole (110), the cutting apparatus (1, 2) is configured to be disposed around the tight buffered fiber (20) in a first state and a second state,
- wherein, in the first state of the cutting apparatus, the cutting apparatus (1, 2) is disposed rotatably around a longitudinal axis of the tight buffered fiber (20), and the cutting device (130) is configured to slide over a surface (26) of the tight buffered fiber (20)
- wherein, in the second state of the cutting apparatus, the rotational movement of the cutting apparatus (1, 2) around the longitudinal axis of tight buffered fiber (20) is blocked and the cutting apparatus (1, 2) is disposed movably in a direction parallel to the longitudinal axis of the tight buffered fiber, and the cutting device (130) is configured to engage into a groove (25) of the tight buffered fiber (20) and to cut the coating (22) of the tight buffered fiber (20) by moving the cutting apparatus (1, 2) in the direction parallel to the longitudinal axis of the tight buffered fiber (20),
- wherein the cutting device (130) is disposed in the opening (120), and comprises a blade (131), and is arranged in the opening (120) movably between a first position in which the blade (131) is disposed outside the hole (110) and a second position in which the blade (131) penetrates into the hole (110),
- wherein the cutting device (130) comprises a plunger (132) coupled to the blade (131), the plunger (132) projecting out of the opening (120), and the cutting device (130) is configured to be moved from the first position to the second position by pressing the plunger (132) into the opening (120),
- wherein the opening (120) comprises a first section (121) and a second section (122) being in contact with each other,
**characterized in that** the first section (121) has a narrower diameter than the second section (122), and the blade (131) is guided within the first section (121) of the opening (120) and the plunger (132) is guided within the second section (122) of the opening (120), when the cutting device (130) is moved from the first position to the second position,
wherein the second section (122) of the opening (120) comprises a first end (E122a) coupled to the surface (101) of the body (100) and a second end (E122b) coupled to first section (121) of the opening (120), and the second end (E122b) of the second section (122) is formed as an arrestor which limits the intrusion of the blade (131) into the hole (110), when moving the cutting device (130) from the first position to the second position, such that, when the tight buffered fiber (20) is inserted in the hole (110), the blade (131) of the cutting apparatus (130) cuts a coating (22) of the tight buffered fiber in a radial direction of the tight buffered fiber, when the plunger (132) hits the arrestor.

2. The cutting apparatus as claimed in claim 1, wherein the first section (121) of the opening (120) has a first end (E121a) coupled to the hole (110) and a second end (E121b) coupled to the second section (122) of the opening (120).

3. The cutting apparatus as claimed in claims 1 or 2, comprising:
- a sensing device (150) to sense a surface (26) of the tight buffered fiber (20) to find the groove (25) of the tight buffered fiber (20),
- wherein the body (100) comprises another opening (140) extending from the outer surface (101) of the body (100) to the hole (110), and the sensing device (150) is disposed in the other opening (140).

4. The cutting apparatus as claimed in claim 3, wherein
the sensing device (150) comprises a stylus (151), and is formed so that the stylus (151) touches the surface (25) of the tight buffered fiber (20), in the first state of the cutting apparatus (1, 2).

5. The cutting apparatus as claimed in claim 4, wherein
the sensing device (150) comprises a spring element (152) to exert a force on the the stylus (151) and an adjusting element (153) to adjust a tension of the spring element (152), and the spring element (152) is arranged between the stylus (151) and the adjusting element (153).

6. The cutting apparatus as claimed in one of claims 3 to 5, wherein
the other opening (140) comprises a first section (141) and a second section (142) being in contact with each other, the first section (141) extending to the hole (110) and the second section (142) extending to the surface (101) of the body (100), the first section (141) having a narrower diameter than the second section (142), and the stylus (150) comprises a mechanical probe (1511) and a plunger (1512) coupled to each other, the mechanical probe (1511) being guided in the first section (141) and the plunger (1512) being guided in the second section (142) of the other opening (140).

7. The cutting apparatus as claimed in claim 6, wherein
the second section (142) of the other opening (140) comprises a thread (143), and the adjusting element (153) is formed as a screw disposed in the thread (143), and the tension of the spring element (152) is adjustable by setting the position of the screw in the thread.

8. The cutting apparatus as claimed in any of claims 5 to 7, wherein the mechanical probe (1511) comprises a round-shaped tip (1513).

9. Method to cut a coating (22) of a grooved tight buffered fiber (20), comprising:
- providing the cutting apparatus (1, 2) to cut the coating (22) of the grooved tight buffered fiber (20) as claimed in any of claims 1 or 2,
- inserting the tight buffered fiber (20) into the hole (110),
- turning the cutting apparatus (1, 2) around the longitudinal axis of the tight buffered fiber (20) until the cutting device (130) engages a groove (25) of the tight buffered fiber,
- pressing the cutting device (130) through the opening (120) into the groove (25) of the tight buffered fiber (20) and thereby cutting the coating (22) of the tight buffered fiber (20) in a radial direction of the tight buffered fiber (20),
- moving the cutting apparatus (1, 2) in the longitudinal direction of the tight buffered fiber (20), and cutting the coating (22) along the longitudinal direction of the tight buffered fiber (20).

10. Method to cut a coating (22) of a grooved tight buffered fiber (20), comprising:
- providing the cutting apparatus (1, 2) to cut the coating (22) of the grooved tight buffered fiber (20) as claimed in any of claims 3 to 8,
- inserting the tight buffered fiber (20) into the hole (110),
- turning the cutting apparatus (1, 2) around the longitudinal axis of the tight buffered fiber (20), wherein during the turning movement, the sensing device (150) slides along the surface (25) of the tight buffered fiber (20) until the sensing device (150) snaps into the groove (25) of the tight buffered fiber (20),
- pressing the cutting device (130) through the opening (120) into the groove (25) of the tight buffered fiber (20) and thereby cutting the coating (22) of the tight buffered fiber (20) in a radial direction of the tight buffered fiber (20),
- moving the cutting apparatus (1, 2) in the longitudinal direction of the tight buffered fiber (20), and cutting the coating (22) of the cable along the longitudinal direction of the tight buffered fiber (20).

## Patentansprüche

1. Schneidevorrichtung (1, 2) zum Durchschneiden einer Ummantelung (22) einer gerillten, kompakt ummantelten Faser (20), wobei die kompakt ummantelte Faser eine Längsachse hat, Folgendes aufweisend:
- einen Körper (100) mit einem Loch (110) zum Einführen der kompakt ummantelten Faser (20),
- ein Schneidegerät (130) zum Durchschneiden der Ummantelung (22) der kompakt ummantelten Faser,
- eine Öffnung (120), die sich von einer Außenfläche (101) des Körpers (100) zum Loch (110) erstreckt,
- wobei, wenn die kompakt ummantelte Faser (20) in das Loch (110) eingeführt ist, die Schneidevorrichtung (1, 2) dazu ausgelegt ist, um die kompakt ummantelte Faser (20) herum in einem ersten Zustand und einem zweiten Zustand angeordnet zu sein,
- wobei im ersten Zustand der Schneidevorrichtung die Schneidevorrichtung (1, 2) drehbeweglich um eine Längsachse der kompakt ummantelten Faser (20) angeordnet ist, und das Schneidegerät (130) dazu ausgelegt ist, über eine Oberfläche (26) der kompakt ummantelten Faser (20) zu gleiten,
- wobei im zweiten Zustand der Schneidevorrichtung die Drehbewegung der Schneidevorrichtung (1, 2) um die Längsachse der kompakt ummantelten Faser (20) blockiert ist, und die Schneidevorrichtung (1, 2) in einer zur Längsachse der kompakt ummantelten Faser parallelen Richtung beweglich angeordnet ist, und das Schneidegerät (130) dazu ausgelegt ist, in eine Rille (25) der kompakt ummantelten Faser (20) einzugreifen und die Ummantelung (22) der kompakt ummantelten Faser (20) durchzuschneiden, indem die Schneidevorrichtung (1, 2) in der zur Längsachse der kompakt ummantelten Faser (20) parallelen Richtung bewegt wird,
- wobei das Schneidegerät (130) in der Öffnung (120) angeordnet ist und eine Klinge (131) aufweist, und in der Öffnung (120) zwischen einer ersten Position, in der die Klinge (131) außerhalb des Lochs (110) angeordnet ist, und einer zweiten Position beweglich angeordnet ist, in der die Klinge (131) in das Loch (110) eindringt,
- wobei das Schneidegerät (130) einen Stößel (132) aufweist, der an die Klinge (131) angeschlossen ist, wobei der Stößel (132) aus der Öffnung (120) heraus vorsteht und das Schneidegerät (130) dazu ausgelegt ist, durch Einpressen des Stößels (132) in die Öffnung (120) von der ersten zur zweiten Position bewegt zu werden,
- wobei die Öffnung (120) einen ersten Abschnitt (121) und einen zweiten Abschnitt (122) aufweist, die miteinander in Kontakt stehen,
**dadurch gekennzeichnet, dass** der erste Abschnitt (121) einen engeren Durchmesser hat als der zweite Abschnitt (122), und die Klinge (131) im ersten Abschnitt (121) der Öffnung (120) geführt wird, und der Stößel (132) im zweiten Abschnitt (122) der Öffnung (120) wird, wenn das Schneidegerät (130) von der ersten Position zur zweiten Position bewegt wird,
wobei der zweite Abschnitt (122) der Öffnung (120) ein erstes Ende (E122a), das an die Oberfläche (101) des Körpers (100) angeschlossen ist, und ein zweites Ende (E122b) aufweist, das an den ersten Abschnitt (121) der Öffnung (120) angeschlossen ist, und das zweite Ende (E122b) des zweiten Abschnitts (122) als Anschlag ausgebildet ist, der das Eindringen der Klinge (131) in das Loch (110) einschränkt, wenn das Schneidegerät (130) von der ersten Position zur zweiten Position bewegt wird, so dass, wenn die kompakt ummantelte Faser (20) in das Loch (110) eingeführt ist, die Klinge (131) der Schneidevorrichtung (130) eine Ummantelung (22) der kompakt ummantelten Faser in einer radialen Richtung der kompakt ummantelten Faser durchschneidet, wenn der Stößel (132) auf den Anschlag aufschlägt.

2. Schneidevorrichtung nach Anspruch 1, wobei der erste Abschnitt (121) der Öffnung (120) ein erstes Ende (E121a), das an das Loch (110) angeschlossen ist, und ein zweites Ende (E121b) hat, das an den zweiten Abschnitt (122) der Öffnung (120) angeschlossen ist.

3. Schneidevorrichtung nach den Ansprüchen 1 oder 2, Folgendes aufweisend:
- eine Abfühleinrichtung (150) zum Abfühlen einer Oberfläche (26) der kompakt ummantelten Faser (20), um die Rille (25) der kompakt ummantelten Faser (20) zu finden,
- wobei der Körper (100) eine weitere Öffnung (140) aufweist, die sich von der Außenfläche (101) des Körpers (100) zum Loch (110) erstreckt, und die Abfühleinrichtung (150) in der weiteren Öffnung (140) angeordnet ist.

4. Schneidevorrichtung nach Anspruch 3, wobei
die Abfühleinrichtung (150) einen Taststift (151) aufweist und so ausgebildet ist, dass der Taststift (151) im ersten Zustand der Schneidevorrichtung (1, 2) die Oberfläche (25) der kompakt ummantelten Faser (20) berührt.

5. Schneidevorrichtung nach Anspruch 4, wobei
die Abfühleinrichtung (150) eine Federelement (152) zum Ausüben einer Kraft auf den Taststift (151) und ein Einstellelement (153) zum Einstellen einer Spannung des Federelements (152) aufweist, und das Federelement (152) zwischen dem Taststift (151) und dem Einstellelement (153) angeordnet ist.

6. Schneidevorrichtung nach einem der Ansprüche 3 bis 5, wobei
die weitere Öffnung (140) einen ersten Abschnitt (141) und einen zweiten Abschnitt (142) aufweist, die miteinander in Kontakt stehen, wobei sich der erste Abschnitt (141) zum Loch (110) erstreckt und sich der zweite Abschnitt (142) zur Oberfläche (101) des Körpers (100) erstreckt, wobei der erste Abschnitt (141) einen engeren Durchmesser hat als der zweite Abschnitt (142), und der Taststift (151) einen mechanischen Taster (1511) und einen Stößel (1512) aufweist, die aneinander angeschlossen sind, wobei der mechanische Taster (1511) im ersten Abschnitt (141) geführt ist und der Stößel (1512) im zweiten Abschnitt (142) der weiteren Öffnung (140) geführt ist.

7. Schneidevorrichtung nach Anspruch 6, wobei
der zweite Abschnitt (142) der weiteren Öffnung (140) ein Gewinde (143) aufweist, und das Einstellelement (153) als Schraube ausgebildet ist, die im Gewinde (143) angeordnet ist, und die Spannung des Federelements (152) durch Einstellen der Position der Schraube im Gewinde einstellbar ist.

8. Schneidevorrichtung nach einem der Ansprüche 5 bis 7, wobei
der mechanische Taster (1511) eine rund geformte Spitze (1513) aufweist.

9. Verfahren zum Durchschneiden einer Ummantelung (22) einer gerillten, kompakt ummantelten Faser (20), Folgendes umfassend:
- Bereitstellen der Schneidevorrichtung (1, 2) zum Durchschneiden der Ummantelung (22) der gerillten, kompakt ummantelten Faser (20) nach einem der Ansprüche 1 oder 2,
- Einführen der kompakt ummantelten Faser (20) in das Loch (110),
- Drehen der Schneidevorrichtung (1, 2) um die Längsachse der kompakt ummantelten Faser (20), bis das Schneidegerät (130) in eine Rille (25) der kompakt ummantelten Faser (20) eingreift,
- Einpressen des Schneidegeräts (130) durch die Öffnung (120) in die Rille (25) der kompakt ummantelten Faser (20) und dadurch Durchschneiden der Ummantelung (22) der kompakt ummantelten Faser (20) in einer radialen Richtung der kompakt ummantelten Faser (20),
- Bewegen der Schneidevorrichtung (1, 2) in der Längsrichtung der kompakt ummantelten Faser (20) und Durchschneiden der Ummantelung (22) entlang der Längsrichtung der kompakt ummantelten Faser (20).

10. Verfahren zum Durchschneiden einer Ummantelung (22) einer gerillten, kompakt ummantelten Faser (20), Folgendes umfassend:
- Bereitstellen der Schneidevorrichtung (1, 2) zum Durchschneiden der Ummantelung (22) der gerillten, kompakt ummantelten Faser (20) nach einem der Ansprüche 3 bis 8,
- Einführen der kompakt ummantelten Faser (20) in das Loch (110),
- Drehen der Schneidevorrichtung (1, 2) um die Längsachse der kompakt ummantelten Faser (20), wobei während der Drehbewegung die Abfühleinrichtung (150) entlang der Oberfläche (25) der kompakt ummantelten Faser (20) gleitet, bis die Abfühleinrichtung (150) in die Rille (25) der kompakt ummantelten Faser (20) einrastet,
- Einpressen des Schneidegeräts (130) durch die Öffnung (120) in die Rille (25) der kompakt ummantelten Faser (20) und dadurch Durchschneiden der Ummantelung (22) der kompakt ummantelten Faser (20) in einer radialen Richtung der kompakt ummantelten Faser (20),
- Bewegen der Schneidevorrichtung (1, 2) in der Längsrichtung der kompakt ummantelten Faser (20) und Durchschneiden der Ummantelung (22) des Kabels entlang der Längsrichtung der kompakt ummantelten Faser (20).

## Revendications

1. Dispositif de découpe (1, 2) pour découper un revêtement (22) d'une fibre à gaine serrée (20) rainurée, la fibre à gaine serrée ayant un axe longitudinal, comprenant :
- un corps (100) comprenant un trou (110) pour insérer la fibre à gaine serrée (20),
- un appareil de découpe (130) pour découper le revêtement (22) de la fibre à gaine serrée,
- une ouverture (120) s'étendant d'une surface extérieure (101) du corps (100) au trou (110),
- sachant que, lorsque la fibre à gaine serrée (20) est insérée dans le trou (110), le dispositif de découpe (1, 2) est configuré pour être disposé autour de la fibre à gaine serrée (20) dans un premier état et un deuxième état,
- sachant que, dans le premier état du dispositif de découpe, le dispositif de découpe (1, 2) est disposé de manière rotative autour d'un axe longitudinal de la fibre à gaine serrée (20), et l'appareil de découpe (130) est configuré pour coulisser sur une surface (26) de la fibre à gaine serrée (20),
- sachant que, dans le deuxième état du dispositif de découpe, le mouvement de rotation du dispositif de découpe (1, 2) autour de l'axe longitudinal de la fibre à gaine serrée (20) est bloqué et le dispositif de découpe (1, 2) est disposé de manière mobile dans une direction parallèle à l'axe longitudinal de la fibre à gaine serrée, et l'appareil de découple (130) est configuré pour s'engager dans une rainure (25) de la fibre à gaine serrée (20) et pour découper le revêtement (22) de la fibre à gaine serrée (20) en déplaçant le dispositif de découpe (1, 2) dans la direction parallèle à l'axe longitudinal de la fibre à gaine serrée (20),
- sachant que l'appareil de découpe (130) est disposé dans l'ouverture (120), et comprend une lame (131), et est agencé dans l'ouverture (120) de manière mobile entre une première position dans laquelle la lame (131) est disposée à l'extérieur du trou (110) et une deuxième position dans laquelle la lame (131) entre dans le trou (110),
- sachant que l'appareil de découpe (130) comprend un piston plongeur (132) couplé à la lame (131), le piston plongeur (132) faisant saillie hors de l'ouverture (120), et l'appareil de découpe (130) est configuré pour être déplacé de la première position à la deuxième position par poussée du piston plongeur (132) dans l'ouverture (120),
- sachant que l'ouverture (120) comprend une première section (121) et une deuxième section (122) qui sont en contact l'une avec l'autre,
**caractérisé en ce que** la première section (121) a un diamètre plus étroit que la deuxième section (122), et la lame (131) est guidée à l'intérieur de la première section (121) de l'ouverture (120) et le piston plongeur (132) est guidé à l'intérieur de la deuxième section (122) de l'ouverture (120), lorsque l'appareil de découpe (130) est déplacé de la première position à la deuxième position,
sachant que la deuxième section (122) de l'ouverture (120) comprend une première extrémité (E122a) couplée à la surface (101) du corps (100) et une deuxième extrémité (E122b) couplée à la première section (121) de l'ouverture (120), et la deuxième extrémité (E122b) de la deuxième section (122) est formée comme butée qui limite l'intrusion de la lame (131) dans le trou (110), lors du déplacement de l'appareil de découpe (130) de la première position à la deuxième position, de telle sorte que, lorsque la fibre à gaine serrée (20) est insérée dans le trou (110), la lame (131) de l'appareil de découpe (130) découpe un revêtement (22) de la fibre à gaine serrée dans une direction radiale de la fibre à gaine serrée, lorsque le piston plongeur (132) touche la butée.

2. Le dispositif de découpe tel qu'exposé dans la revendication 1, dans lequel la première section (121) de l'ouverture (120) présente une première extrémité (E121a) couplée au trou (110) et une deuxième extrémité (E121b) couplée à la deuxième section (122) de l'ouverture (120).

3. Le dispositif de découpe tel qu'exposé dans la revendication 1 ou 2, comprenant :
- un appareil de détection (150) pour détecter une surface (26) de la fibre à gaine serrée (20) afin de trouver la rainure (25) de la fibre à gaine serrée (20),
- sachant que le corps (100) comprend une autre ouverture (140) s'étendant de la surface extérieure (101) du corps (100) au trou (110), et l'appareil de détection (150) est disposé dans l'autre ouverture (140).

4. Le dispositif de découpe tel qu'exposé dans la revendication 3, dans lequel
l'appareil de détection (150) comprend un stylet (151), et est formé de telle sorte que le stylet (151) touche la surface (25) de la fibre à gaine serrée (20), dans le premier état du dispositif de découpe (1, 2).

5. Le dispositif de découpe tel qu'exposé dans la revendication 4, dans lequel
l'appareil de détection (150) comprend un élément ressort (152) pour exercer une force sur le stylet (151) et un élément de réglage (153) pour régler une tension de l'élément ressort (152), et l'élément ressort (152) est agencé entre le stylet (151) et l'élément de réglage (153).

6. Le dispositif de découpe tel qu'exposé dans l'une des revendications 3 à 5, dans lequel
l'autre ouverture (140) comprend une première section (141) et une deuxième section (142) qui sont en contact l'une avec l'autre, la première section (141) s'étendant au trou (110) et la deuxième section (142) s'étendant à la surface (101) du corps (100), la première section (141) ayant un diamètre plus étroit que la deuxième section (142), et le stylet (151) comprend une sonde mécanique (1511) et un piston plongeur (1512) couplés l'un à l'autre, la sonde mécanique (1511) étant guidée dans la première section (141) et le piston plongeur (1512) étant guidé dans la deuxième section (142) de l'autre ouverture (140).

7. Le dispositif de découpe tel qu'exposé dans la revendication 6, dans lequel
la deuxième section (142) de l'autre ouverture (140) comprend un filetage (143), et l'élément de réglage (153) est formé comme vis disposée dans le filetage (143), et la tension de l'élément ressort (152) est réglable via la position de la vis dans le filetage.

8. Le dispositif de découpe tel qu'exposé dans l'une quelconque des revendications 5 à 7, dans lequel la sonde mécanique (1511) comprend une pointe arrondie (1513).

9. Procédé de découpe d'un revêtement (22) d'une fibre à gaine serrée (20) rainurée, comprenant :
- la mise à disposition du dispositif de découpe (1, 2) pour découper le revêtement (22) de la fibre à gaine serrée (20) rainurée tel qu'exposé dans l'une quelconque des revendications 1 ou 2,
- l'insertion de la fibre à gaine serrée (20) dans le trou (110),
- la rotation du dispositif de découpe (1, 2) autour de l'axe longitudinal de la fibre à gaine serrée (20) jusqu'à ce que l'appareil de découpe (130) s'engage dans une rainure (25) de la fibre à gaine serrée,
- le fait de pousser l'appareil de découpe (130) à travers l'ouverture (120) dans la rainure (25) de la fibre à gaine serrée (20) et de découper ainsi le revêtement (22) de la fibre à gaine serrée (20) dans une direction radiale de la fibre à gaine serrée (20),
- le déplacement du dispositif de découpe (1, 2) dans la direction longitudinale de la fibre à gaine serrée (20), et la découpe du revêtement (22) le long de la direction longitudinale de la fibre à gaine serrée (20).

10. Procédé de découpe d'un revêtement (22) d'une fibre à gaine serrée (20) rainurée, comprenant :
- la mise à disposition du dispositif de découpe (1, 2) pour découper le revêtement (22) de la fibre à gaine serrée (20) rainurée tel qu'exposé dans l'une quelconque des revendications 3 à 8,
- l'insertion de la fibre à gaine serrée (20) dans le trou (110),
- la rotation du dispositif de découpe (1, 2) autour de l'axe longitudinal de la fibre à gaine serrée (20), sachant que, pendant le mouvement de rotation, l'appareil de détection (150) coulisse le long de la surface (25) de la fibre à gaine serrée (20) jusqu'à ce que l'appareil de détection (150) s'enclenche dans la rainure (25) de la fibre à gaine serrée (20),
- le fait de pousser l'appareil de découpe (130) à travers l'ouverture (120) dans la rainure (25) de la fibre à gaine serrée (20) et de découper ainsi le revêtement (22) de la fibre à gaine serrée (20) dans une direction radiale de la fibre à gaine serrée (20),
- le déplacement du dispositif de découpe (1, 2) dans la direction longitudinale de la fibre à gaine serrée (20), et la découpe du revêtement (22) du câble le long de la direction longitudinale de la fibre à gaine serrée (20).
